# EUROPEAN PATENT APPLICATION

(11) **EP 4 471 272 A1**
(43) Date of publication of application: **04.12.2024**
(21) Application number: 24179021.1
(22) Date of filing: 30.05.2024
(51) Int. Cl.: F04B 43/04, F04B 53/16, F04B 17/03, F04B 23/02, F04B 49/025, F04B 49/06, F04B 53/00, F04B 53/04, F04B 53/20

(54) **CONDENSATE PUMP ASSEMBLY**

(30) Priority: 30.05.2023 GB 202308061
(71) Applicant: Aspen Pumps Limited, Hailsham, East Sussex BN27 3WA (GB)
(72) Inventor: Potter, Mark, BN27 3WA Hailsham (GB); Jones, Ciaran, BN27 3WA Hailsham (GB)
(74) Representative: Brown, Alexander Edward

(57) **Abstract**

The present disclosure comprises a condensate pump assembly for use with an air conditioning system. The condensate pump assembly comprises a housing comprising an inlet region and an outlet region; an inlet duct entering the housing through the inlet region; an outlet duct exiting the housing through the outlet region; and a rotary pump arranged within the housing to pump liquid from the inlet duct to the outlet duct. The inlet duct is positioned in a direction which is substantially perpendicular to a direction of the outlet duct.

## Description

### TECHNICAL FIELD

The invention relates to a condensate pump assembly and a method of manufacturing a condensate pump assembly.

### BACKGROUND

Condensate pumps are used to pump liquid condensate from appliances that produce condensate, for example an air conditioning system, HVAC (heating, ventilation and air conditioning) system, a condensing boiler system or a refrigerator, out of a room or building. In a typical air conditioning system, the air conditioning unit produces liquid condensate, i.e. water, which is typically collected in a tray or reservoir, and needs to be drained away from the appliance. If the appliance installation location is such that it is not practical to provide an open drainage duct to drain under gravity away from the appliance or tray/reservoir, a condensate pump assembly is required to pump the condensate away from the appliance to a suitable liquid drain.

Some prior art condensate pump assemblies include a liquid reservoir in the form of a liquid receptacle, and the condensate pump assembly may be mounted to a wall of the room or building, typically below the appliance, or alternatively may be mounted within trunking or ducting within which condensate flow pipes are routed. Such condensate pump assemblies may be an add-on to appliances such as air conditioning units, and not integrated into the appliance. When the liquid receptacle is sufficiently filled with liquid, the liquid is pumped from the liquid receptacle via a liquid inlet and away from the condensate pump assembly, for example outside the room, via a liquid outlet. In order that such condensate pumps may operate optimally and with minimal impact on their immediate environment, it is desirable for them to be discrete, concealable and quiet in operation.

### BRIEF SUMMARY OF THE DISCLOSURE

The present disclosure provides a condensate pump assembly for use with an air conditioning system, the condensate pump assembly comprising: a housing comprising an inlet region and an outlet region; an inlet duct entering the housing through the inlet region; an outlet duct exiting the housing through the outlet region; a rotary pump arranged within the housing to pump liquid from the inlet duct to the outlet duct; wherein the inlet duct is positioned in a direction which is substantially perpendicular to a direction of the outlet duct.

The rotary pump may be a rotary diaphragm pump.

The housing may be substantially L-shaped and may comprise a first portion and a second portion.

The first portion of the housing may comprise the outlet region and the second portion of the housing may comprises the inlet region.

The first portion of the housing may comprise a substantially vertically upstanding rear wall, the rotary pump may be arranged adjacent to said rear wall.

The rotary pump may be substantially cylindrical in shape and may comprise a longitudinal axis extending in a direction substantially parallel to the direction of the outlet duct.

The second portion of the housing may define a liquid reservoir configured to contain liquid entering the condensate pump assembly via the inlet duct.

The liquid reservoir may comprise a longitudinal axis extending in a direction substantially parallel to the inlet duct.

The liquid reservoir may comprise a weir configured to control the flow of liquid within the liquid reservoir.

The condensate pump assembly may comprise a liquid level sensor configured to detect the liquid level within the liquid reservoir.

The condensate pump assembly may comprise a filter component arranged proximate to the inlet duct and may be configured to filter liquid entering the liquid reservoir via the inlet duct.

The filter component may be a strainer filter.

The housing may comprise an aperture configured to expose the liquid reservoir to the atmosphere.

The condensate pump assembly may comprise a pick-up tube configured to transport liquid from the liquid reservoir to the rotary pump.

The pick-up tube may extend in a direction parallel to the longitudinal axis of the rotary pump.

The pick-up tube may be positioned within the first portion of the housing between the rotary (diaphragm) pump and the rear wall of the first portion of the housing.

The condensate pump assembly may comprise a second filter component arranged proximate to an inlet of the pick-up tube.

The second filter component may be a sponge filter.

The condensate pump assembly may comprise a potting box comprising electrical control components sealed within the potting box, and wherein all high-voltage electrical components and connections of the condensate pump assembly are sealed within the potting box.

The electrical control components within the potting box may be arranged in a substantially L-shaped orientation.

At least one resilient pad may be disposed between the rotary (diaphragm) pump and the housing to suppress transmission of vibrations from the rotary pump to the housing.

A resilient member may be disposed at one end of the rotary pump to suppress transmission of vibrations from the rotary pump to the housing.

A resilient member may be disposed at each end of the rotary pump to suppress transmission of vibrations from the rotary pump to the housing.

The resilient member may be an elastomeric cup.

The outlet duct may be formed from silicon.

The present disclosure also provides a method of manufacturing a condensate pump assembly, the method comprising: providing a housing comprising an inlet region and an outlet region; providing an inlet duct which enters the housing through the inlet region; providing an outlet duct which exists the housing through the outlet region; arranging a rotary pump within the housing to pump liquid from the inlet duct to the outlet duct; and positioning the inlet duct in a direction which is substantially perpendicular to a direction of the outlet duct.

### BRIEF DESCRIPTION OF THE DRAWINGS

Embodiments of the invention are described hereafter, by way of example only, with reference to the accompanying drawings, in which:
Figure 1 is a front isometric view of a condensate pump assembly of an embodiment;
Figure 2 is a rear isometric view of a condensate pump assembly shown in Figure 1;
Figure 3 is an isometric cross-sectional view of the condensate pump assembly shown in Figures 1 and 2.
Figure 4 is an exploded view of the condensate pump assembly shown in Figures 1 to 3; and
Figure 5 is a flow chart of a method of manufacturing a condensate pump assembly.

### DETAILED DESCRIPTION

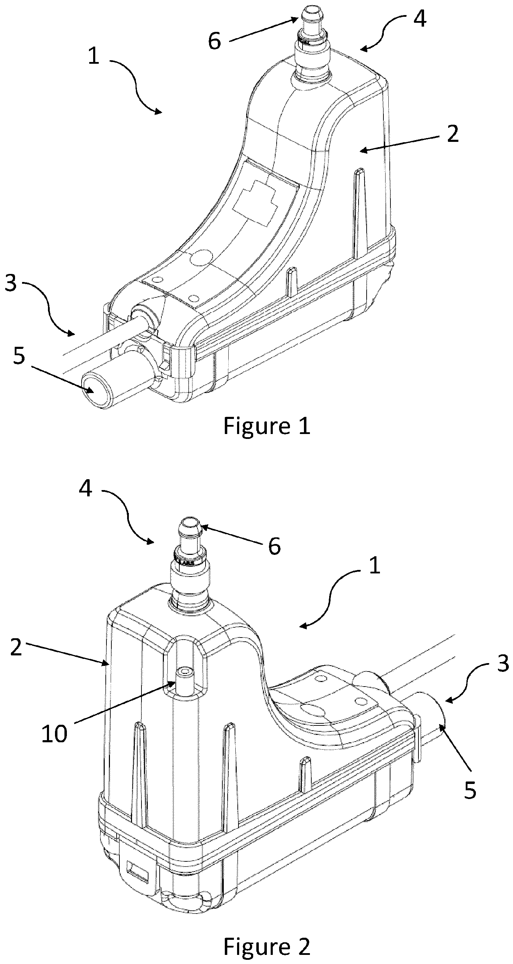

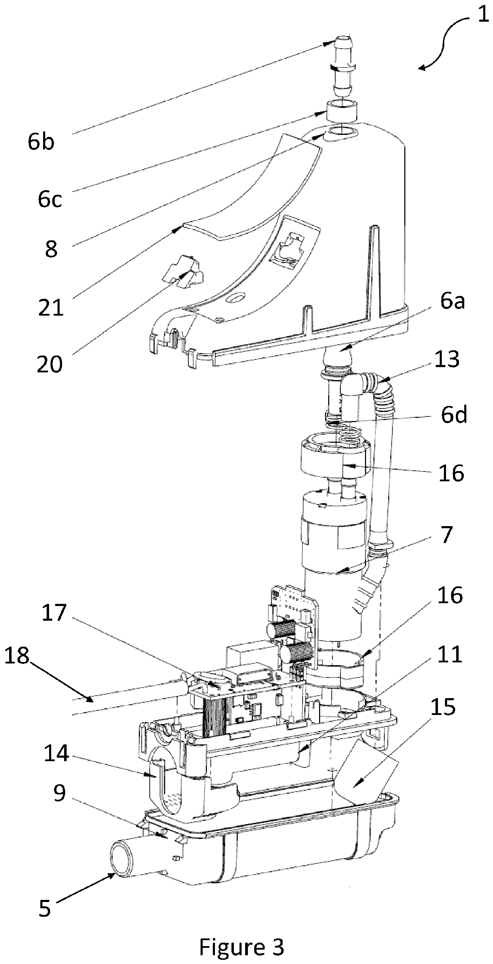

Figures 1 and 2 show front and rear isometric views respectively of a condensate pump assembly 1. The condensate pump assembly 1 comprises a housing 2 comprising an inlet region 3 and an outlet region 4. The condensate pump assembly 1 further comprises an inlet duct 5 entering the housing 2 through the inlet region 3 and an outlet duct 6 exiting the housing 2 through the outlet region 4. A rotary pump 7 (shown in Figure 3) is arranged within the housing 2 to pump liquid from the inlet duct 5 to the outlet duct 6. As seen in Figures 1 and 2, the inlet duct 5 is positioned in a direction which is substantially perpendicular to a direction of the outlet duct 6. In other words, the housing 2 is substantially L-shaped. Providing the housing 2 in a substantially L-shaped arrangement allows the condensate pump assembly 1 to more easily fit within the trunking of the various appliances which the condensate pump assembly 1 works in conjunction with whilst minimising the space taken up by the condensate pump assembly 1.

Figure 3 shows an exploded view of the condensate pump assembly 1 depicted in Figures 1 and 2. The housing 2 comprises a first portion 8 and a second portion 9 detachably coupled to the first portion 8. The first portion 8 of the housing 2 comprises the outlet duct 6 and the second portion 9 of the housing 2 comprises the inlet duct 5. The outlet duct 6 comprises an outlet hose 6a, a hose coupler 6b and hose clamps 6c, 6d. Furthermore, the outlet duct 6 is formed from a soft material, such as silicon, therefore reducing the transmission of vibrations from the rotary pump to the housing 2. The rotary pump 7 is substantially cylindrical in shape and comprises a longitudinal axis extending in a direction substantially parallel to the direction of the outlet duct 6.

The second portion 9 of the housing 2 defines a liquid reservoir 9 configured to contain liquid entering the condensate pump assembly 1 via the inlet duct 5. As shown in Figure 1, the housing 2 comprises an aperture 10 configured to expose the liquid reservoir 9 to the atmosphere to prevent air locks being generated within the liquid reservoir 9. Referring back to Figure 3, a seal is formed between the first portion 8 and the second portion 9 by a lid 11 of the liquid reservoir 9. A gasket (not shown) may also be provided to seal the first and second portions 8, 9 of the housing 2. The liquid reservoir 9 comprises a longitudinal axis extending in a direction substantially parallel to the inlet duct 5. In other words, the liquid reservoir 9 is arranged substantially perpendicular to the rotary pump 7.

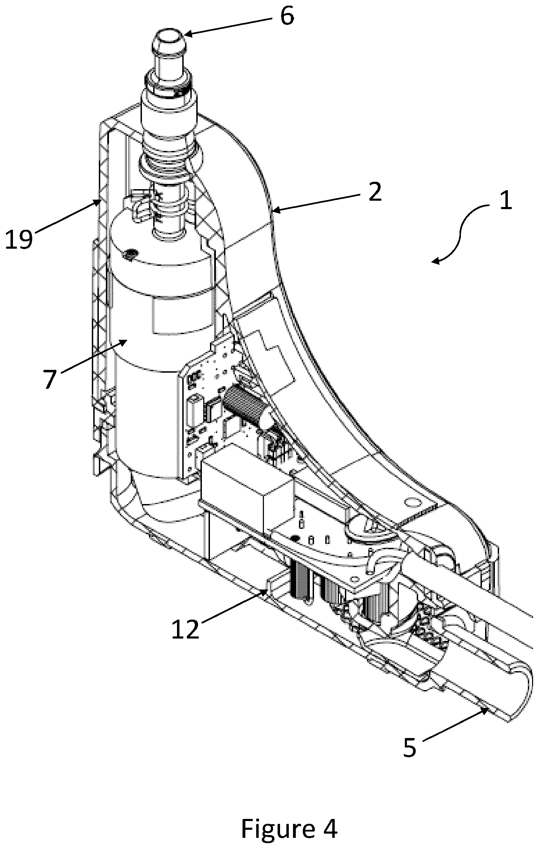

The liquid reservoir 9 comprises a weir 12 (shown in Figure 4) configured to control the flow of liquid within the liquid reservoir 9. Additionally, the condensate pump assembly 1 comprises a liquid level sensor (not shown) configured to detect the liquid level within the liquid reservoir 9 and control the rotary pump 7 accordingly. While the liquid level sensor is preferably a noncontact sensor, such as a capacitance sensor, it would be apparent that another type of liquid level sensor may be used instead. The weir 12 is configured to be sufficiently tall to be effective in catching the typical dirt and debris found in condensate water within the liquid reservoir 9. However, the weir 12 is preferably not too tall such that the reservoir is effectively separated into two compartments which will fill in series. This may result in the pump run frequency increasing as the volume of water in which the sensor is located is thereby effectively smaller and therefore fills faster. This may be undesirable from a noise consideration point of view. Accordingly, in some embodiments, the weir 12 may be between 2 and 4mm in height.

The condensate pump assembly 1 comprises a pick-up tube 13 configured to transport liquid from the liquid reservoir 9 into the rotary pump 7. As seen in Figure 3, the pick-up tube 13 extends in a direction parallel to the longitudinal axis of the rotary pump 7. The pick-up tube 13 extends into the liquid reservoir 9 to draw collected condensate out of the liquid reservoir 9.

The condensate pump assembly 1 comprises a filter component 14 arranged proximate to the inlet duct 5. The filter component 14 is configured to filter liquid entering the liquid reservoir 9 via the inlet duct 5. As seen in Figure 3, the filter component 14 is a strainer filter, configured to remove relatively large debris from the liquid entering the condensate pump assembly 1. By placing the filter component 14 in the fluid flow path between the inlet duct 5 and the rotary pump 7 and securing the filter component 14 such that the filter component 14 extends across the width of the liquid reservoir 9, larger particulate debris can be prevented from reaching the rotary pump 7. The filter component 14 has a length along the surface of the filter component 14 in a direction across the liquid reservoir 9 greater than the distance between the facing walls of the liquid reservoir 9. This ensures that the cross-sectional area of the filter component 14 is greater than the cross-sectional area of the distance directly across the liquid reservoir 9 whereby to improve the capacity of the filter component 14. While the filter component 14 is shown comprising a plurality of circular holes, it would be apparent that other shapes of holes may be used. Furthermore, the condensate pump assembly 1 comprises a second filter component 15 arranged proximate to an inlet of the pick-up tube 13. As seen in Figure 3, the second filter component 15 is a sponge filter, configured to remove relatively small debris from the liquid flowing out of the liquid reservoir 9 and into the pick-up tube 13.

At least one resilient pad (not shown) is provided between the rotary pump 7 and the first portion 8 of the housing 2, in direct contact with the rotary pump 7 and the surface immediately adjacent to the rotary pump 7. The at least one resilient pad may be made of any suitable material, such as plastic or elastomer, and may be made of a sponge or rubber material. The resilient pad therefore prevents direct contact between the rotary pump 7 and an adjacent hard surface of the condensate pump assembly 1 such as the first portion 8 of the housing 2. The at least one resilient pad can be considered as an anti-vibration arrangement configured to reduce the noise of the condensate pump assembly 1 in use as the at least one resilient pad suppresses the transmission of vibrations from the rotary pump to the housing 2. Furthermore, the condensate pump assembly 1 comprises a resilient pad 21 disposed on the first portion 8 of the housing 2. The resilient pad 21 prevents direct contact between the housing 2 and the trunking within which the condensate pump assembly 1 is arranged and therefore prevents the transmission of vibrations from the housing 2 to the trunking. The at resilient pad 21 may be made of any suitable material, such as plastic or elastomer, and may be made of a sponge or rubber material.

Additionally, the condensate pump assembly 1 comprises a resilient member 16 disposed at one end of the rotary pump 7. The resilient member 16 is configured to suppress transmission of vibrations from the rotary pump 7 to the housing 2. The resilient member 16 may be made of any suitable material, such as plastic or elastomer, and may be made of a sponge or rubber material. Preferably, the resilient member 16 is an elastomeric cup. The condensate pump assembly 1 shown in Figure 3 comprises a resilient member 16 is disposed at each end of the rotary pump 7.

The condensate pump assembly 1 further comprises a sealed potting box which houses the electrical components. In particular, the electrical components include a PCB 17 within the potting box. A pump controller may be mounted on, or otherwise connected to, the PCB 17. Having electrical components of the condensate pump assembly 1 sealed within the potting box can mean those components are secure from water contamination from condensate or other ambient liquids to prevent against malfunction and increase reliability of the overall condensate pump assembly 1. In particular, in an embodiment, the condensate pump assembly 1 receives power via a high voltage supply, such as 240V mains supply, and has low voltage operative components, such as the rotary pump 7 and liquid level sensor, which may operate at, for example, 6V, 12V or 24V. The high voltage supply may be fed to the control components within the potting box through a high voltage supply cable 18 fluidly sealed at the point the high voltage supply cable 18 enters the potting box. All high voltage connections are advantageously contained within the sealed potting box, including transformer means to step down the high voltage supply to a required low voltage supply. Only low voltage electrical connections, via sealed low voltage wiring, exit the potting box to feed to components of the condensate pump assembly 1 external to the potting box, such as the rotary pump 7 and liquid level sensor. As such, all high voltage connections and electrical control components are sealed within the potting box to prevent against external water contact which could damage the components and cause malfunction. As seen in Figure 3, the electrical components within the potting box are arranged in a substantially L-shaped orientation. This ensures that the electrical components are efficiently housed within the substantially L-shaped housing 2.

The condensate pump assembly 1 further comprises a hatch cover 20 configured to close a hatch in the first portion 8 of the housing 2. The hatch cover 20 is may allow access to a connector on the PCB 17 in the assembled pump assembly 1. Access may be required if the pump assembly 1 needs to be reprogrammed after the pump assembly has been fully built and the electronics potted (as it is not possible to disassemble after potting).

Figure 4 shows an exploded view of the condensate pump assembly 1 shown in Figures 1 to 3. The first portion 8 of the housing 2 comprises a substantially vertically upstanding rear wall 19. As seen in Figure 4, when the condensate pump assembly 1 is assembled, the rotary pump is arranged adjacent to the rear wall 19. The pick-up tube 13 is positioned within the first portion 8 of the housing 2 between the rotary pump 7 and the rear wall 19 of the first portion 8 of the housing 2.

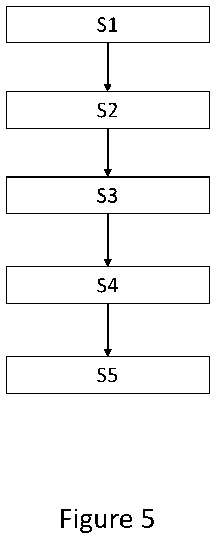

Figure 5 illustrates a flow chart of a method manufacturing a condensate pump assembly. The method comprises a first step S1 of providing a housing comprising an inlet region and an outlet region. The second step S2 comprises providing an inlet duct which enters the housing through the inlet region. The method comprises a third step S3 of providing an outlet duct which exists the housing through the outlet region. The method further comprises a fourth step S4 of arranging a rotary pump within the housing to pump liquid from the inlet duct to the outlet duct. A fifth step of the method S5 comprises positioning the inlet duct in a direction which is substantially perpendicular to a direction of the outlet duct.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings) may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method so disclosed.

## Claims

1. A condensate pump assembly for use with an air conditioning system, the condensate pump assembly comprising:
a housing comprising an inlet region and an outlet region;
an inlet duct entering the housing through the inlet region;
an outlet duct exiting the housing through the outlet region;
a rotary pump arranged within the housing to pump liquid from the inlet duct to the outlet duct;
wherein the inlet duct is positioned in a direction which is substantially perpendicular to a direction of the outlet duct.

2. A condensate pump assembly according to claim 1, wherein the housing is substantially L-shaped and comprises a first portion and a second portion.

3. A condensate pump assembly according to claim 2, wherein the first portion of the housing comprises the outlet duct and the second portion of the housing comprises the inlet duct.

4. A condensate pump assembly according to claims 2 or 3, wherein the first portion of the housing comprises a substantially vertically upstanding rear wall, the rotary pump being arranged adjacent to said rear wall.

5. A condensate pump assembly according to any of claims 1 to 4, wherein the rotary pump is substantially cylindrical in shape and comprises a longitudinal axis extending in a direction substantially parallel to the direction of the outlet duct.

6. A condensate pump assembly according to any of claims 2 to 5, wherein the second portion of the housing defines a liquid reservoir configured to contain liquid entering the condensate pump assembly via the inlet duct.

7. A condensate pump assembly according to claim 6, wherein the liquid reservoir comprises a longitudinal axis extending in a direction substantially parallel to the inlet duct.

8. A condensate pump assembly according to claim 6 or claim 7, comprising a liquid level sensor configured to detect the liquid level within the liquid reservoir.

9. A condensate pump assembly according to claims 6 to 8, comprising a filter component arranged proximate to the inlet duct and configured to filter liquid entering the liquid reservoir via the inlet duct.

10. A condensate pump assembly according to any of claims 6 to 9, wherein the housing comprises an aperture configured to expose the liquid reservoir to the atmosphere.

11. A condensate pump assembly according to any of claims 6 to 10, comprising a pick-up tube configured to transport liquid from the liquid reservoir to the rotary pump, and optionally wherein the pick-up tube extends in a direction parallel to the longitudinal axis of the rotary pump.

12. A condensate pump assembly according to claim 11, when dependent on claim 4, wherein the pick-up tube is positioned within the first portion of the housing between the rotary pump and the rear wall of the first portion of the housing.

13. A condensate pump assembly according to any preceding claim, comprising a potting box comprising electrical control components sealed within the potting box, and wherein all high-voltage electrical components and connections of the condensate pump assembly are sealed within the potting box.

14. A condensate pump assembly according to any preceding claim, wherein a resilient member is disposed at one end of the rotary pump to suppress transmission of vibrations from the rotary pump to the housing, and optionally wherein a resilient member is disposed at each end of the rotary pump to suppress transmission of vibrations from the rotary pump to the housing.

15. A method of manufacturing a condensate pump assembly, the method comprising:
providing a housing comprising an inlet region and an outlet region;
providing an inlet duct which enters the housing through the inlet region;
providing an outlet duct which exists the housing through the outlet region;
arranging a rotary pump within the housing to pump liquid from the inlet duct to the outlet duct; and
positioning the inlet duct in a direction which is substantially perpendicular to a direction of the outlet duct.
